# EUROPEAN PATENT APPLICATION

(11) **EP 4 614 317 A1**
(43) Date of publication of application: **10.09.2025**
(21) Application number: 23885474.9
(22) Date of filing: 10.10.2023
(51) Int. Cl.: G06F 8/76, G06F 21/51, G06F 21/64

(54) **APPLICATION PROVISION EQUIPMENT, APPLICATION PROVISION METHOD, AND PROGRAM**

(30) Priority: 02.11.2022 JP 2022176370
(71) Applicant: Sony Semiconductor Solutions Corporation, Atsugi-shi, Kanagawa 243-0014 (JP)
(72) Inventor: HIBINO, Tomokazu, Atsugi-shi, Kanagawa 243-0014 (JP); NAGAO, Shinichi, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/036706
(87) International publication number: WO 2024/095711

(57) **Abstract**

Provided are an application provision device, an application provision method, and a program that allow for provision of an application in a format suitable for a user's device without increasing the burden on application developers.

The application provision device includes an application conversion unit that converts an application retrieved from an application database in accordance with device information retrieved from a device information database as information regarding a device on which the application is run.

## Description

### TECHNICAL FIELD

The present technology relates to an application provision device, an application provision method, and a program.

### BACKGROUND ART

An application provision system called an online marketplace is available, where applications developed by developers, manufacturers, companies, individuals, and the like are sold and provided to users over the Internet (Patent Document 1).

In order for the user to deploy an application provided from the online marketplace to a specific device and run the application, the application needs to be pre-converted into a format executable on the device according to differences in devices (hardware, operating system (OS), and the like).

Therefore, for a framework where applications for IoT devices are developed, a technology has been proposed to pre-package applications and deploy the resulting package on the basis of configuration information regarding a deployment target device (Patent Document 2).

### CITATION LIST

### PATENT DOCUMENT

Patent Document 1: U.S. Patent Publication No. 2013/0212160
Patent Document 2: U.S. Patent Publication No. 2018/0143825

### SUMMARY OF THE INVENTION

### PROBLEMS TO BE SOLVED BY THE INVENTION

The technology disclosed in Patent Document 2, however, has a disadvantage that the pre-packaging applications increases the burden on application developers.

The present technology has been made in view of such circumstances, and it is therefore an object of the present technology to provide an application provision device, an application provision method, and a program that allow for provision of an application in a format suitable for a user's device without increasing the burden on application developers.

### SOLUTIONS TO PROBLEMS

In order to solve the above-described problem, a first technology is an application provision device including an application conversion unit that converts an application retrieved from an application database in accordance with device information retrieved from a device information database as information regarding a device on which the application is run.

Furthermore, a second technology is an application provision method including converting an application retrieved from an application database in accordance with device information retrieved from a device information database as information regarding a device on which the application is run.

Furthermore, a third technology is a program for causing a computer to execute an application provision method, the method including converting an application retrieved from an application database in accordance with device information retrieved from a device information database as information regarding a device on which the application is run.

### BRIEF DESCRIPTION OF DRAWINGS

Fig. 1 is a block diagram illustrating a configuration of an application provision system 10.
Fig. 2 is a block diagram illustrating a configuration of a server device 500.
Fig. 3 is a block diagram illustrating a configuration of an application provision device 100.
Fig. 4 is an explanatory diagram of three formats in WASM.
Fig. 5 is a sequence diagram illustrating processing in the application provision system 10 and the application provision device 100.
Fig. 6 is a sequence diagram illustrating processing in the application provision system 10 and the application provision device 100.
Fig. 7 is a flowchart illustrating processing of switching the format of an application.
Fig. 8 is a flowchart illustrating processing of switching the format of an application.
Fig. 9 is a diagram illustrating source code executed to compare processing times.
Fig. 10 is a table showing results of processing speed comparison.
Fig. 11 is a diagram illustrating a first specific example of the application provision system 10.
Fig. 12 is a diagram illustrating a second specific example of the application provision system 10.
Fig. 13 is a block diagram illustrating a software configuration of a target device 400t.
Fig. 14 is a diagram illustrating a first specific example of processing performed under the software configuration of the target device 400t.
Fig. 15 is a diagram illustrating a second specific example of processing performed under the software configuration of the target device 400t.
Fig. 16 is a diagram illustrating a GUI for enrolling a device 400 in the application provision device 100.
Fig. 17 is a diagram illustrating the GUI for enrolling the device 400 in the application provision device 100.
Fig. 18 is a diagram illustrating a GUI for deploying an application to the target device 400t.
Fig. 19 is a diagram illustrating the GUI for deploying an application to the target device 400t.
Fig. 20 is a diagram illustrating the GUI for deploying an application to the target device 400t.
Fig. 21 is a diagram illustrating a GUI for undeploying an application.

### MODE FOR CARRYING OUT THE INVENTION

Hereinafter, an embodiment of the present technology will be described with reference to the drawings. Note that the description will be given in the following order.
<1. Embodiment>
[1-1. Configuration of application provision system 10]
[1-2. Configuration of application provision device 100]
[1-3. Processing in application provision device 100]
[1-4. Software configuration of target device 400t]
[1-5. Description of GUI for device enrollment and application deployment]
<2. Modifications>

### <1. Embodiment>

### [1-1. Configuration of application provision system 10]

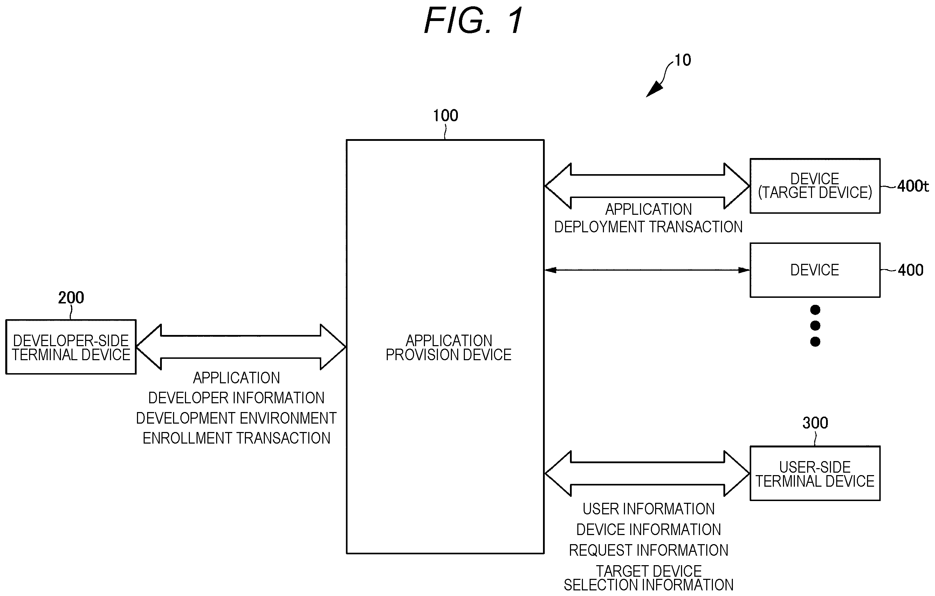

First, a configuration of an application provision system 10 will be described with reference to Fig. 1. The application provision system 10 includes an application provision device 100, a developer-side terminal device 200 used by an individual (referred to as developer) who develops an application program (hereinafter, referred to as application), a user-side terminal device 300 used by an individual (referred to as user) who uses the application, and a device 400 on which the application runs. Note that the developer is not limited to an individual, and may be, a manufacturer, a company, or the like. Furthermore, the user is also not limited to an individual, and may be a manufacturer, a company, or the like.

The developer-side terminal device 200, the user-side terminal device 300, and the device 400 are each connected to the application provision device 100 over a network. Note that, Fig. 1 illustrates one developer-side terminal device 200 and one user-side terminal device 300, but in reality, a plurality of developer-side terminal devices 200 and a plurality of user-side terminal devices 300 are connected to the application provision device 100 over the network.

The application provision device 100 is responsible for enrolling and storing an application uploaded from the developer-side terminal device 200 and transmitting and deploying an application requested by the user using the user-side terminal device 300 to the device 400 selected by the user for deployment. The device 400 selected by the user to run an application from among a plurality of devices 400 is referred to as target device 400t. Note that conditions that each application needs to meet to be allowed for enrollment may include that the application has a memory model that does not depend on the target device 400t, and both or at least one of the following: that the application has the ability to call a predetermined application programming interface (API), or that the application itself has an API to receive a predetermined call. Note that the conditions for permitting the enrollment are not essential, and the enrollment may be permitted without imposing the conditions.

It is possible to implement, by using the application provision device 100, a so-called online marketplace where applications are provided online in response to user's requests. Note that each application may be provided as a paid service based on a purchase that requires the user to pay, or may be provided for free that does not require monetary payment.

The developer-side terminal device 200 is used by each application developer to upload the application to the application provision device 100 for enrollment. The developer may develop the application using the developer-side terminal device 200, or may develop the application using a device other than the developer-side terminal device 200 and communicate with the application provision device 100 using the developer-side terminal device 200 for uploading the application, for example. Examples of the developer-side terminal device 200 include a personal computer, a smartphone, a tablet terminal, a server device, and the like. The developer-side terminal device 200 may be a system including a server provided with a development environment.

The user-side terminal device 300 is used by the user to request the application provision device 100 to provide the application, select the target device 400t on which the application runs, and the like. Examples of the user-side terminal device 300 include a personal computer, a smartphone, a tablet terminal, a wearable device, and the like.

Examples of the device 400 include various devices and equipment capable of running the application requested by the user using the user-side terminal device 300. Specifically, the examples of the device 400 include an Internet of Things (IoT) device, a personal computer, a server device, a tablet terminal, a smartphone, a smartwatch, a wearable device, a camera, a portable game console, a home appliance, a mobile unit such as an automobile or a drone, and the like. The device 400 may, however, be any device or equipment capable of running the application. The device 400 includes a CPU, a memory, a storage medium, and the like for the application to run.

The user needs to connect the device 400 to the application provision device 100 over the network in advance. Furthermore, the device 400 may be pre-enrolled in the application provision device 400. The application provision device 100 can be connected with one or more devices 400. For example, there may be a case where the device 400 is a camera, a plurality of cameras is connected to the application provision device 100 in advance, specific cameras are used for detecting individuals, and the other cameras are used for detecting objects, that is, the use case is different for each camera. In such a case, it is also possible to select applications and cameras and deploy different applications to each camera.

The user-side terminal device 300 and the device 400 may be the same. For example, in a case where the user uses a personal computer as the user-side terminal device 300 and runs the application provided from the application provision device 100 on the personal computer, the user-side terminal device 300 and the device 400 are the same.

The developer-side terminal device 200 and the application provision device 100 need to perform mutual authentication (account authentication, server authentication), establish secure communication, verify a developer's user signature, and the like before application enrollment into the application provision device 100.

Furthermore, the user-side terminal device 300 and the application provision device 100 need to perform mutual authentication (device 400 authentication, server authentication), establish secure communication, verify an application signature, and the like before user enrollment into the application provision device 100. Note that the application signature may be verified after application deployment.

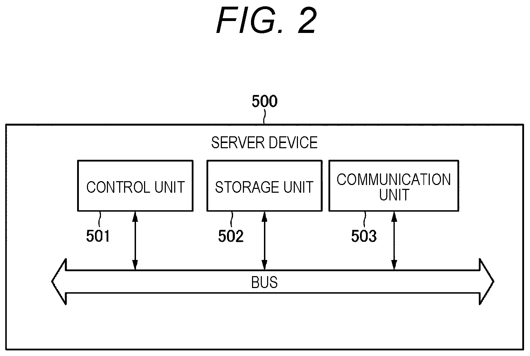

In the present embodiment, the application provision device 100 includes, for example, a server device 500 illustrated in Fig. 2. The server device 500 includes at least a control unit 501, a storage unit 502, and a communication unit 503.

The control unit 501 includes a central processing unit (CPU), a random access memory (RAM), a read only memory (ROM), and the like. The CPU controls the entire server device 500 and each unit by performing various processes in accordance with a program stored in the ROM to issue commands.

The storage unit 502 is a mass storage medium including, for example, a hard disk, a flash memory, or the like. The storage unit 502 stores programs, other data, and the like for operation of the application provision system 10.

The communication unit 503 is a communication interface with the developer-side terminal device 200, the user-side terminal device 300, the device 400, the network, and the like. The communication method may be either wired or wireless. Examples of the communication method include cellular communication, 4G, 5G, Wi-Fi, Bluetooth (registered trademark), near field communication (NFC), Ethernet (registered trademark), high-definition multimedia interface (HDMI (registered trademark)), universal serial bus (USB), and the like. Note that it is preferable to encrypt communication using transport layer security (TLS) or secure sockets layer (SSL).

The application provision system 10 is configured as described above.

### [1-2. Configuration of application provision device 100]

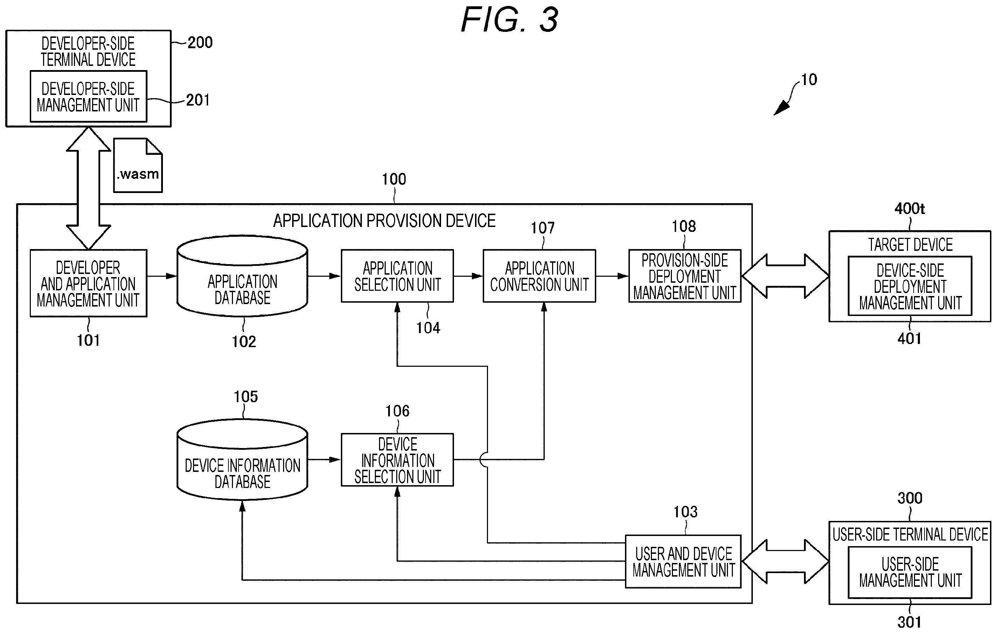

Next, a configuration of the application provision device 100 according to the present embodiment will be described with reference to Fig. 3.

The application provision device 100 includes a developer and application management unit 101, an application database 102, a user and device management unit 103, an application selection unit 104, a device information database 105, a device information selection unit 106, an application conversion unit 107, and a provision-side deployment management unit 108.

The developer and application management unit 101 acquires an application uploaded from the developer-side terminal device 200 and outputs the application to the application database 102 to enroll the application into the application provision device 100. Furthermore, the developer and application management unit 101 is responsible for enrolling developer information transmitted from the developer-side terminal device 200, providing a development environment to the developer-side terminal device 200, managing application-related transactions conducted with the developer-side terminal device 200, and the like.

The developer information includes, for example, information such as a developer's name, login information, an ID, a password, application details, and an application type.

The application database 102 is a database that stores applications uploaded from the developer-side terminal device 200. The applications stored in the application database 102 are in a platform-independent format. The platform-independent format is, for example, WebAssembly (WASM) bytecode. In the present embodiment, the applications uploaded from the developer-side terminal device 200 and stored in the application database 102 are all in WASM. Note that the platform-independent format may be either source code written in C++, Java (registered trademark), JavaScript (registered trademark), or other languages or object code targeted for a virtual machine. It is assumed that a plurality of applications uploaded from one or a plurality of the developer-side terminal devices 200 and enrolled is stored in the application database 102. Each application can access the target device 400t only via APIs provided by entities such as companies that provide services (such as online marketplaces) using the application provision device 100 or APIs permitted by the companies.

The user and device management unit 103 is responsible for enrolling information regarding the device 400 transmitted from the user-side terminal device 300 (referred to as device information), enrolling information regarding the user, managing transactions related to application request and selection of the target device 400t, and the like.

The user information is information regarding the user such as a user's name, login information, an ID, and a password. The device information is, for example, information such as the type of the device 400, device identification information such as the serial number of the device 400, the certificate of the device 400, the configuration of the device 400, and the platform architecture of the device 400 that is a deployment target necessary for application conversion.

The user and device management unit 103 outputs, to the application selection unit 104, application identification information indicating the application requested by the user using the user-side terminal device 300. Furthermore, device identification information indicating the target device 400t selected by the user using the user-side terminal device 300 is output to the device information selection unit 106.

The application selection unit 104 selects and retrieves the application requested by the user from the application database 102 on the basis of the application identification information, and outputs the application to the application conversion unit 107.

The device information database 105 is a database that stores device information.

The device information selection unit 106 selects and retrieves the device information regarding the target device 400t selected by the user (referred to as target device information) from the device information database 105 on the basis of the device identification information, and outputs the device information to the application conversion unit 107.

The application conversion unit 107 converts the application selected by the application selection unit 104 into an object file for the target device 400t on the basis of the target device information. For example, if the application is in a WASM format, the WASM bytecode is converted into an object code for the target device 400t. This application conversion is referred to as compilation.

The application conversion unit 107 outputs the application subjected to conversion to the provision-side deployment management unit 108. Note that the application may be converted during deployment to the target device 400t, or the application may be pre-converted into the object code for each platform, and each object code may be stored in the application database 102.

In the present technology, the application format includes WASM bytecode, Ahead of Time (AoT), and Native. WASM bytecode is an instruction format that runs on a virtual machine and requires a library including an interpreter to run. AoT and Native are both instruction formats that can run directly on the target device, but AoT includes code that checks memory addresses accessed at runtime, and Native does not include such code. Furthermore, AoT requires a library for the above-described memory address check performed at runtime, but Native need not require such a library.

WASM is a technology that enables development of applications that can run in various runtime environments, particularly on devices with limited computing power and memory size, such as IoT devices. However, an interpreter is required to run WASM, which causes devices with limited processing power to face issues in terms of processing time and required memory. When the application is compiled to an AoT format that requires no interpreter, that is, compiled to AoT executable code, the application can run fast and with less memory usage even on a device with limited processing power. Moreover, for faster and more memory-efficient execution, the application can be converted into Native code that disables memory check.

A difference between Native and AoT is the presence or absence of memory check code, and Native does not have memory check code, but AoT has memory check code. Therefore, the application converted into AoT has memory check code. Native is faster in terms of processing speed, but is allowed to access the memory of the target device 400t to which the application has been deployed, and thus can access memory that should not be accessible, which leads to security issues. When the application is converted, information for managing memory access permissions is added to the application. By adding the information during AoT conversion, memory access by the application can be managed.

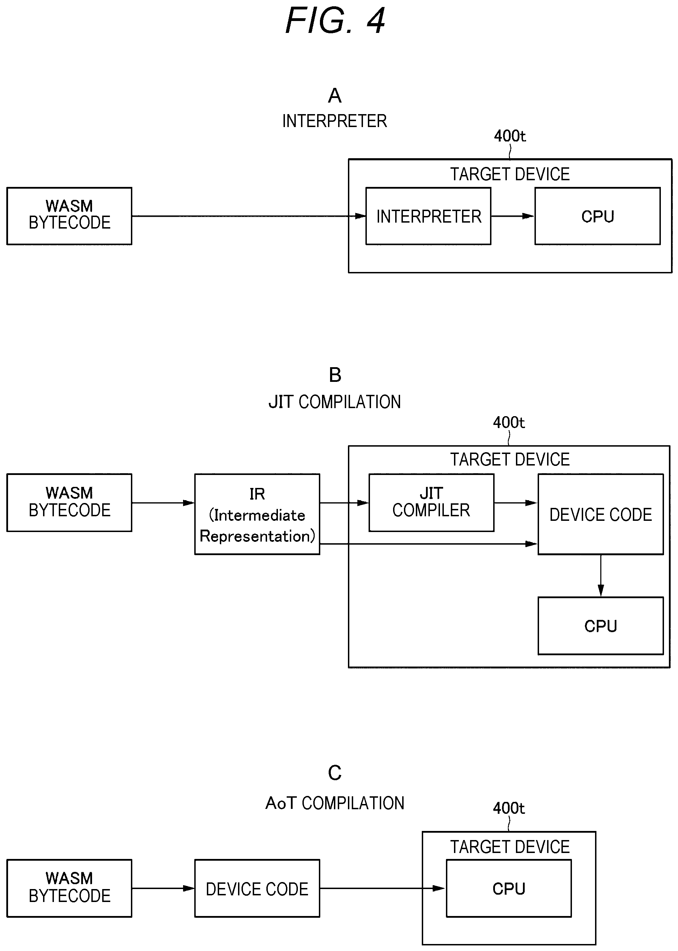

There are three types of WASM execution methods. An interpreter that is the first method illustrated in Fig. 4A involves compiling to Native sequentially, line by line at runtime. Due to the compilation being sequentially performed for each line, processing takes more time, uses more memory, and has inferior performance compared to other formats. Furthermore, for execution, the target device 400t needs to have an interpreter.

Just in time (JIT) compilation that is the second method illustrated in Fig. 4B involves pre-compiling code to an intermediate representation (IR), and compiling the IR to Native at runtime. The initial execution performance is poor, but the subsequent execution performance approaches the performance of Native. For the JIT compilation, the target device 400t needs to have a JIT compiler.

AoT compilation that is the third method illustrated in Fig. 4C involves pre-compiling code to Native tailored to hardware. Processing can be performed with execution performance close to (but not the same as) that of Native. The AoT compilation requires neither the interpreter nor the JIT compiler (but requires runtime for memory check). When the target device 400t has limited memory capacity, it is recommended to adopt the AoT compilation. However, the present technology is not intended to exclude the interpreter and the JIT compiler, and may provide an application converted for the interpreter or the JIT compilation.

Furthermore, the application conversion unit 107 adds a verification signature to the application subjected to conversion. The signature is added to a binary hash of the application. The signature is used for verifying the integrity of the application. By verifying the integrity, tampering can be detected, and as a result, safety is ensured.

AoT allows reductions in processing time and memory usage as compared with WASM, but permits access to the hardware and memory of the target device 400t, which causes a risk of unauthorized access by the application. In order to avoid the risk, it is necessary to take measures such as providing only an application developed by a trusted developer, and not placing confidential information on the target device 400t in a case where an application developed by an untrusted developer is provided. Both the measures, however, restrict applications that can be provided, and impair the convenience for developers and users. Therefore, only an application that has the verification signature added thereto and whose integrity has been verified through verification of the signature before deployment to the target device 400t can run on the target device 400t. However, the application provision device 100 can also provide an application without adding a signature.

Return to Fig. 3. The provision-side deployment management unit 108 deploys the application subjected to conversion by the application conversion unit 107 to the target device 400t. The deployment is the act of making an application operational on the target device 400t, and is completed when the application is downloaded to the target device 400t. Therefore, for the application, deployment, signature verification, and installation are performed in this order. Furthermore, the provision-side deployment management unit 108 manages deployment-related transactions conducted with the target device 400t. The deployment of the application to the target device 400t is performed under the management of the application provision device 100. Anti-tampering measures, including encryption and signing, are taken on the object code for the target device 400t.

Note that the format of the application deployed to the target device 400t may be a platform-independent format such as WASM bytecode, native code for the CPU of the target device 400t, AoT-compiled code (obtained by adding security-check code to native code), or the like.

The application provision device 100 is configured as described above. The developer and application management unit 101, the user and device management unit 103, the application selection unit 104, the device information selection unit 106, the application conversion unit 107, and the provision-side deployment management unit 108 are implemented by processing in the control unit 501. Furthermore, each processing unit may be implemented by a hardware processing block having a dedicated function. Furthermore, the application database 102 and the device information database 105 are configured by the storage unit 502.

In the present embodiment, the server device 500 functions as the application provision device 100, but the application provision device 100 and the application provision method may be implemented by a program executed by any type of electronic device (such as a personal computer, a tablet terminal, or smartphone) equipped with computer functions. The program may be preinstalled on the server device 500 or the electronic device, or may be distributed via download, a storage medium, or the like and installed by the user or the like. Furthermore, the application provision device 100 may be configured as a single device. The application provision device 100 may be a system including a plurality of servers connected to each other over a network.

Note that, as illustrated in Fig. 3, the developer-side terminal device 200 includes a developer-side management unit 201 provided to use the application provision device 100. The developer-side management unit 201 is responsible for uploading an application to the application provision device 100, transmitting developer information to the application provision device 100, manages transactions conducted with the application provision device 100, and the like on the basis of a developer's input operation. Furthermore, the developer-side management unit 201 is further responsible for controlling a graphical user interface (GUI) for using the application provision device 100, and the like. The developer-side management unit 201 can be implemented by a program executed by the developer-side terminal device 200, or may be implemented by a dedicated hardware processing block.

Furthermore, the user-side terminal device 300 includes a user-side management unit 301 provided to use the application provision device 100. The user-side management unit 301 is responsible for performing processing of transmitting device information to the application provision device 100, processing of requesting an application, processing of selecting the target device 400t, and the like on the basis of a user's input operation, and managing transactions conducted with the application provision device 100. Furthermore, the user-side management unit 301 is further responsible for controlling a graphical user interface (GUI) for using the application provision device 100, and the like. An application management unit can be implemented by a program executed by the user-side terminal device 300, or may be implemented by a dedicated hardware processing block.

Furthermore, the device 400 includes a device-side deployment management unit 401. The device-side deployment management unit 401 is responsible for performing processing of deploying an application to the device 400 under the management of the provision-side deployment management unit 108 of the application provision device 100. Furthermore, the device-side deployment management unit 401 is further responsible for managing deployment-related transactions conducted with the application provision device 100. The device-side deployment management unit 401 can be implemented by a program executed by the device 400, or may be implemented by a dedicated hardware processing block.

### [1-3. Processing in the application provision system 10 and the application provision device 100]

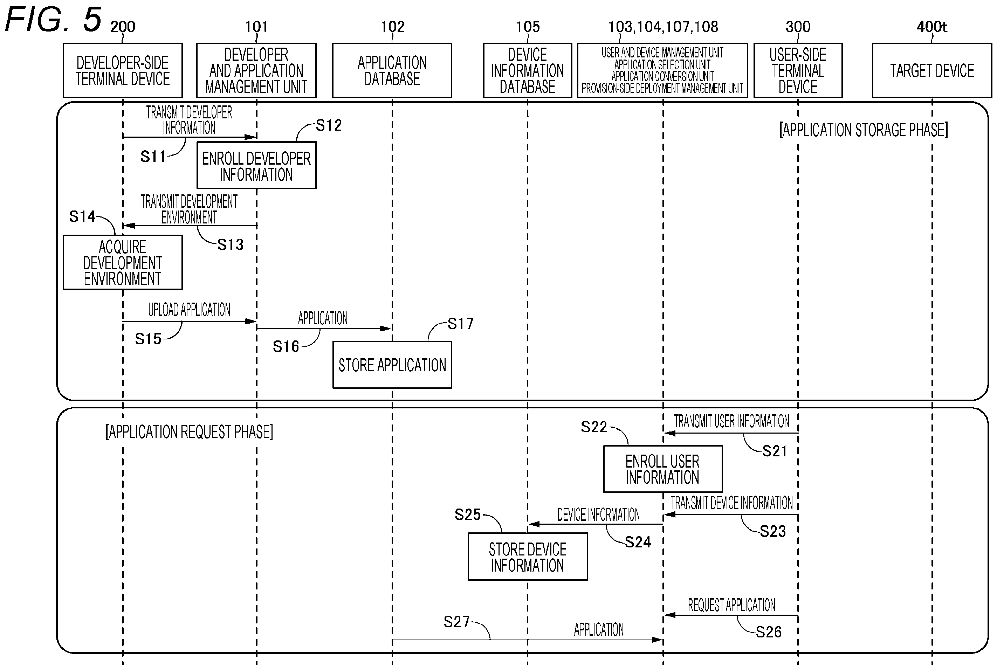

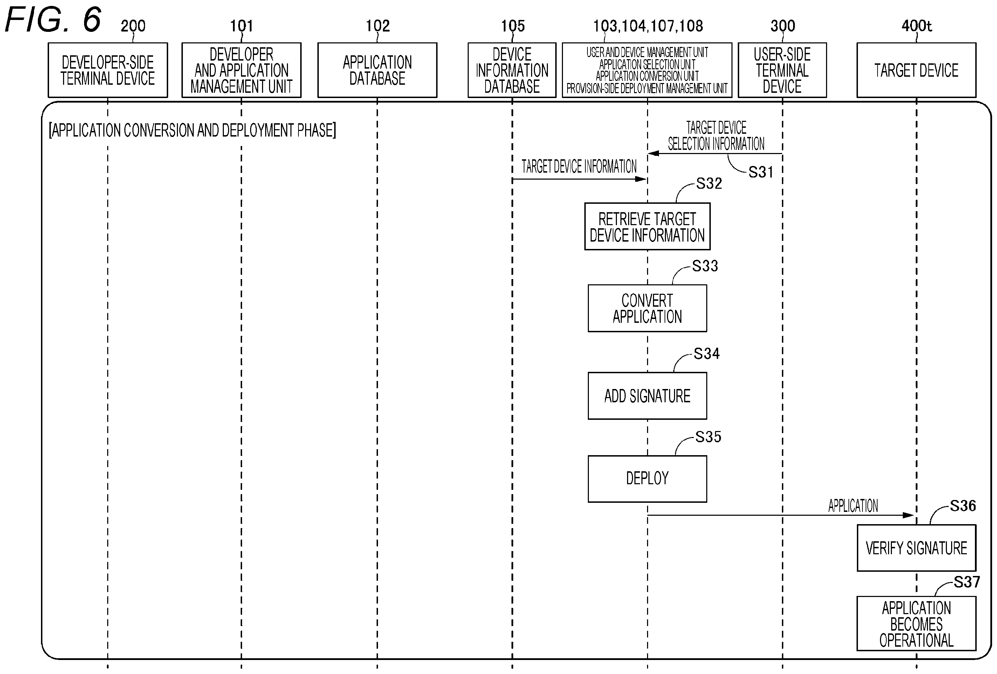

Next, processing in the application provision system 10 and the application provision device 100 will be described with reference to Figs. 5 and 6. Note that, in Figs. 5 and 6, the user and device management unit 103, the application selection unit 104, the application conversion unit 107, and the provision-side deployment management unit 108 are collectively illustrated for the sake of the drawings.

First, an application storage phase will be described with reference to Fig. 5. In step S11, the developer-side terminal device 200 transmits developer information to the application provision device 100 on the basis of a developer's input operation. Then, in step S12, the developer and application management unit 101 enrolls the developer information. The enrollment of the developer information may be performed by storing the developer information in the application database 102 with the developer information associated with an application, or by providing a database for developer information and storing the developer information in the database.

When the developer enrollment is completed, the application provision device 100 transmits an application development environment to the developer-side terminal device 200 in step S13, and the developer-side terminal device 200 acquires the development environment in step S14. Note that the development environment may be provided by the application provision device 100 or may be provided by another device.

Then, after the developer has completed the development of the application, the developer-side terminal device 200 uploads the application to the application provision device 100 on the basis of a developer's input operation in step S15. The uploading of the application is performed by, for example, inputting the application in ".wasm" format directly to the application provision device 100. Note that verification processing may be performed before the application is stored in the application provision device 100.

Next, the developer and application management unit 101 outputs the uploaded application to the application database 102 in step S16, and the application is stored in the application database 102 in step S17.

Next, an application request phase will be described with reference to Fig. 5. First, in step S21, the user-side terminal device 300 transmits user information to the application provision device 100 on the basis of a user's input operation. Then, in step S22, the user and device management unit 103 enrolls the user information. The enrollment of the user information may be performed by storing the user information in the device information database 105 with the user information associated with device information, or by providing a database for user information and storing the user information in the database.

Next, after the user information has been enrolled, the user-side terminal device 300 transmits device information regarding the device 400 to the application provision device 100 on the basis of a user's input operation in step S23. Then, in step S24, the user and device management unit 103 outputs the device information to the device information database 105. Then, in step S25, the enrollment of the device information is performed by storing the device information in the device information database 105. Note that the user may pre-enroll not only the target device 400t that runs the application in the near future but also all the devices 400 that are managed and used by the user and likely to run the application. Note that the transmission of the device information to the application provision device 100 to enroll the device 400 may be performed by an individual other than the user.

After the user information and the device information have been enrolled, the user-side terminal device 300 requests the application provision device 100 to provide the application on the basis of a user's input operation as illustrated in step S26.

In order to request the application, for example, information (name, developer name, function, etc.) regarding each application that can be provided by the application provision device 100 (application stored in the application database 102) is presented to the user through the GUI of the user-side terminal device 300. Then, when the user performs an input operation to select one of the applications, the user-side terminal device 300 transmits information indicating the selected application to the application provision device 100.

Then, in step S27, the application selection unit 104 retrieves the application requested by the user from the application database 102 on the basis of application identification information, and outputs the application to the application conversion unit 107.

Next, an application conversion and deployment phase will be described with reference to Fig. 6. First, when the user selects a device 400 (target device 400t) to which the application is deployed, the user-side terminal device 300 transmits target device selection information to the application provision device 100 as illustrated in step S31.

In order to select the target device 400t, for example, information (name, serial number, etc.) for identifying the corresponding device 400 enrolled in the application provision device 100 is presented to the user through the GUI of the user-side terminal device 300. Then, when the user performs an input operation to select one of the devices 400, the user-side terminal device 300 transmits target device selection information indicating the selected device to the application provision device 100.

Then, the user and device management unit 103 outputs device identification information indicating the selected target device 400t to the device information selection unit 106.

Next, in step S32, the device information selection unit 106 retrieves target device information from the device information database 105 on the basis of the device identification information, and outputs the target device information to the application conversion unit 107.

Note that, when requesting the application, the user may continuously select another target device 400t, or may select another target device 400t after some time has passed since the application was requested. The request of the application and the selection of the device 400 are not necessarily performed simultaneously or continuously within a predetermined period of time. Furthermore, the application may be requested after the target device 400t is selected.

Next, in step S33, the application conversion unit 107 converts the application requested by the user into an object file for the target device 400t on the basis of the target device information. It is possible to identify on which device 400 the application runs on the basis of the target device information, so that the application can be converted according to the target device 400t. Note that, although details will be described later, the application conversion unit 107 can switch the format of the application subjected to conversion.

Next, in step S34, the application conversion unit 107 adds a verification signature to the application subjected to conversion. The application conversion unit 107 outputs the converted and signed application to the provision-side deployment management unit 108.

Next, in step S35, the provision-side deployment management unit 108 deploys the application to the target device 400t.

Then, as illustrated in step S36, the signature is verified by the target device 400t. A public key can be used to verify the signature. The public key may be provided by, for example, the developer of the application or an individual who is the same as or related to the operator of the online marketplace using the application provision device 100. It is preferable that the public key be stored in the target device 400t before the application is provided. The public key may be provided together with a public key certificate issued by a trusted authority. In a case where the signature verification is successful, the application is installed on the target device 400t. This makes the application operational on the target device 400t as illustrated in step S37.

On the other hand, in a case where the signature verification fails, the application is not installed on the target device 400t. Alternatively, the application may be installed but prevented from running.

Note that, in a case where unauthorized memory access by the application is detected as a result of memory check by the target device 400t, error handling may be performed, although depending on how the target device 400t is implemented.

Here, switching of the format of the application converted by the application conversion unit 107 will be described.

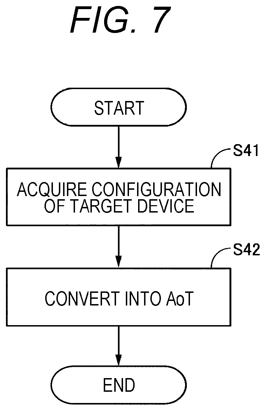

Fig. 7 illustrates a first example of switching the format. Note that it is assumed that the application in the initial state is WASM bytecode.

First, in step S41, the application conversion unit 107 acquires a configuration corresponding to the target device information. Note that the device information selection unit 106 retrieves the configuration from the device information database 105 and outputs the configuration to the application conversion unit 107.

Then, in step S42, the application conversion unit 107 switches the format of the application to AoT.

Note that the format of the application may be switched on the basis of various kinds of information regarding the target device 400t including not only the configuration but also the status of hardware and software, specifications, and the like of the target device 400t.

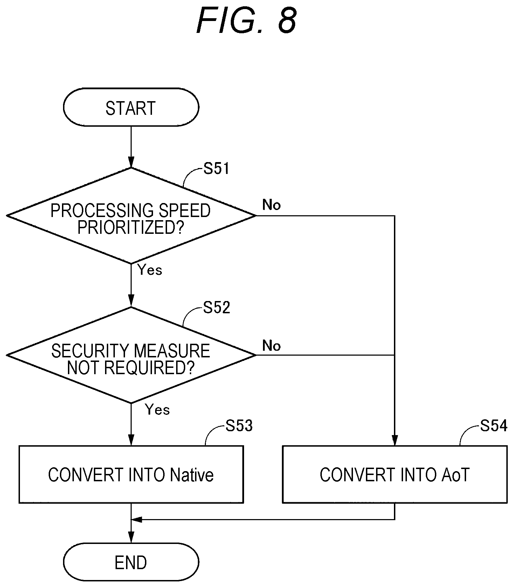

Fig. 8 illustrates a second example of switching the format of the application. Note that it is assumed that the application in the initial state is WASM bytecode.

In a case the processing speed of the application on the target device 400t is prioritized in step S51, the processing proceeds to step S52 (Yes in step S51).

Next, in a case where no security measure is required when the application is run on the target device 400t in step S52, the processing proceeds to step S53 (Yes in step S52).

Then, in step S53, the application conversion unit 107 switches the format of the application to Native. This is because Native is fast in terms of processing speed compared to WASM or AoT, and it is preferable to reduce the processing time by compiling to Native in a case where the processing speed is prioritized, and no security measure is required.

The case where no security measure is required is, for example, a case where the developer of the application is a trusted developer who is the same as or related to the operator of the online marketplace using the application provision device 100, and there is no security issue. This is because the application compiled to Native can access the hardware and memory of the target device 400t without restriction, but it is considered safe even if the application developed by such a trusted developer accesses the hardware and memory of the target device 400t. Whether or not the developer of the application is the same as or related to the operator of the online marketplace using the application provision device 100 can be determined on the basis of the developer information enrolled in step S12 described above.

On the other hand, in a case where the processing speed of the application on the target device 400t is not prioritized in step S51 (No in step S51), or in a case where the security measure is required in step S52, the processing proceeds to step S54 (No in step S52).

Then, in step S54, the application conversion unit 107 switches the format of the application to AoT.

Note that steps S51 and S52 may be performed in reverse order.

In the processing illustrated in Fig. 8, the format is switched on the basis of the processing speed and security measure, but the format may be switched on the basis of only whether or not the processing speed is prioritized, or the format may be switched on the basis of only whether or not the security measure is required.

Information indicating whether or not the processing speed is prioritized and whether or not the security measure is required can be input by the user using the user-side terminal device 300 and input from the user and device management unit 103 to the application conversion unit 107. Alternatively, "processing speed is prioritized for this application" may be predetermined as application-specific information. For example, a case where the developer of the application is the same as or related to the operator of the online marketplace using the application provision device 100, and there is no security issue automatically eliminates the need for the security measure. In this case, it is not necessary for the user to input whether or not the security measure is required.

Note that, in the processing illustrated in Figs. 7 and 8, the format of the application is switched to either Native or AoT; however, in a case where it is preferable to switch the format to WASM bytecode, the corresponding determination flow may be added to enable the switch to WASM bytecode. For example, in a case where the deployment target is a high-performance device 400, a high-performance cloud server, or the like, and running the application with an interpreter is acceptable, WASM bytecode may be used.

The format of the application conversion may be switched in accordance with, for example, the status and usage of the target device 400t obtained through feedback from the target device 400t, other than the methods illustrated in Figs. 7 and 8.

For example, in a case where the target device 400t is not performing specific processing, it is not necessary to prioritize the processing speed, and an application converted into AoT or WASM bytecode is deployed to the target device 400t accordingly. Thereafter, in a case where feedback indicating that it is necessary to perform processing at high speed has been received from the target device 400t, the same application is converted into Native and deployed, for example.

Furthermore, in a case where no security measure is required and the application is converted into Native and deployed to the target device 400t at first, but feedback indicating that the security measure is required has been received while the target device 400t is in operation, the application is converted into AoT and deployed to the device 400 again, for example. For this purpose, the application provision device 100 is only required to output the feedback received from the target device 400t to the application conversion unit 107.

Note that the application may be converted into a format specified by the user. For example, the above can be achieved by displaying a list of available formats on the GUI of the user-side terminal device 300 and causing the user to select one of the formats and output the corresponding selection information to the application conversion unit 107.

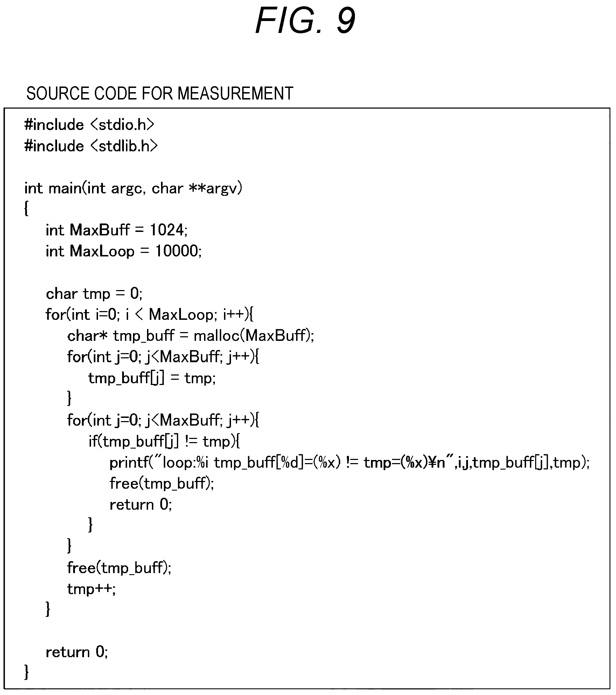

Here, comparison results of processing times in a case of running the same source code converted into Native, WASM bytecode, and AoT are shown. The source code is the same as illustrated in Fig. 9.

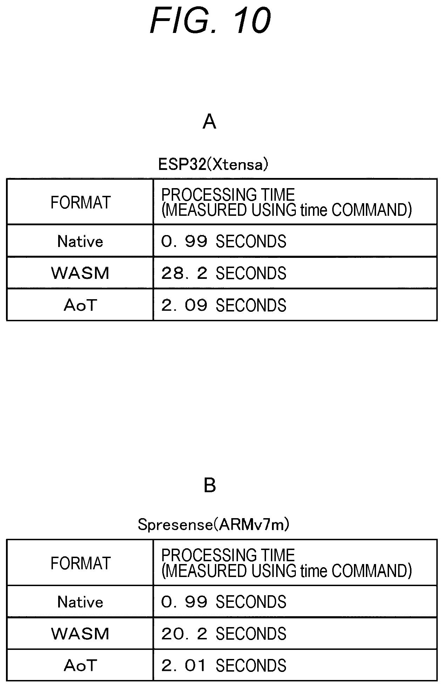

Fig. 10A shows results of running the source code illustrated in Fig. 9 on a microcontroller called ESP32 developed by Espressif Systems, the microcontroller including the Tensilica Xtensa microprocessor.

The processing time was 0.99 seconds for Native, 28.2 seconds for WASM bytecode, and 2.09 seconds for AoT.

Fig. 10B shows results of running the source code illustrated in Fig. 9 converted into Native, WASM bytecode, and AoT on a board computer called Spresence (registered trademark) developed by Sony Corporation and capable of incorporating a smart sensing processor for IoT applications.

The processing time was 0.99 seconds for Native, 20.2 seconds for WASM bytecode, and 2.01 seconds for AoT.

In either result, WASM bytecode has a longer processing time due to the inclusion of the interpreter processing and other factors. Furthermore, AoT has a shorter processing time than WASM bytecode. Therefore, in a case where reducing the processing time is prioritized, it is preferable to compile to AoT rather than WASM bytecode.

At the assembly code level, the processing time of AoT is, however, approximately twice as long as that of Native due to guard processing for memory access management. Therefore, in a case where there is no need to compile to AoT (for example, in a case where the developer of the application is a trusted individual and there is no security issue, or the like), it is preferable to compile to Native.

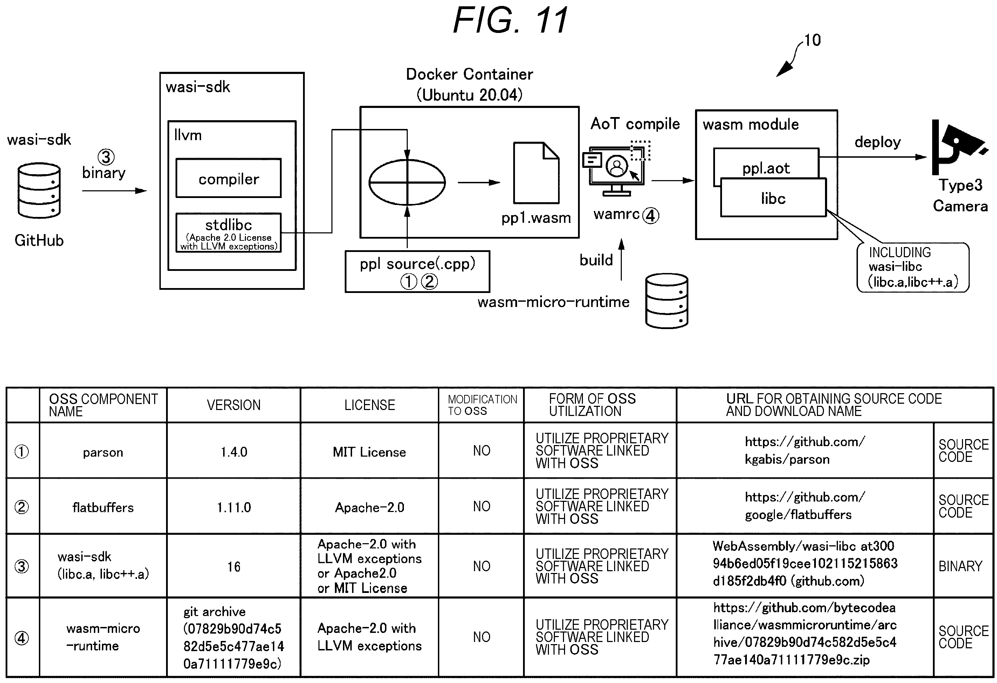

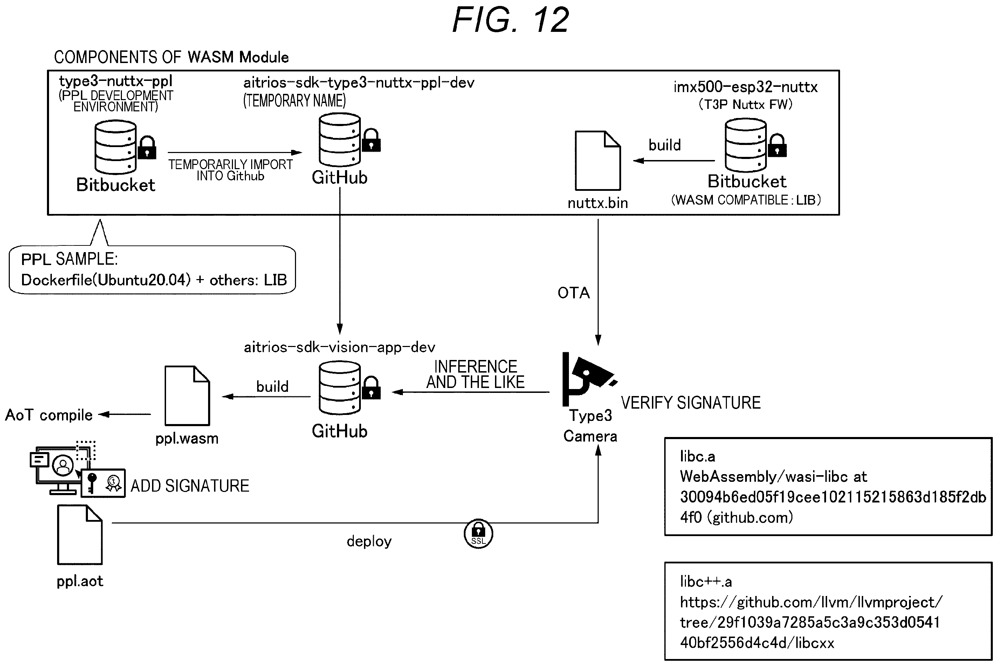

Figs. 11 and 12 are diagrams illustrating specific examples of the application provision system 10. In practice, the application provision system 10 can be configured in this manner. In the specific examples illustrated in Figs. 11 and 12, the target device 400t is a camera. Furthermore, the developer may upload the application to the application provision device 100 using an online source code management service such as GitHub (registered trademark) or Bitbucket (registered trademark).

### [1-4. Software configuration of target device 400t]

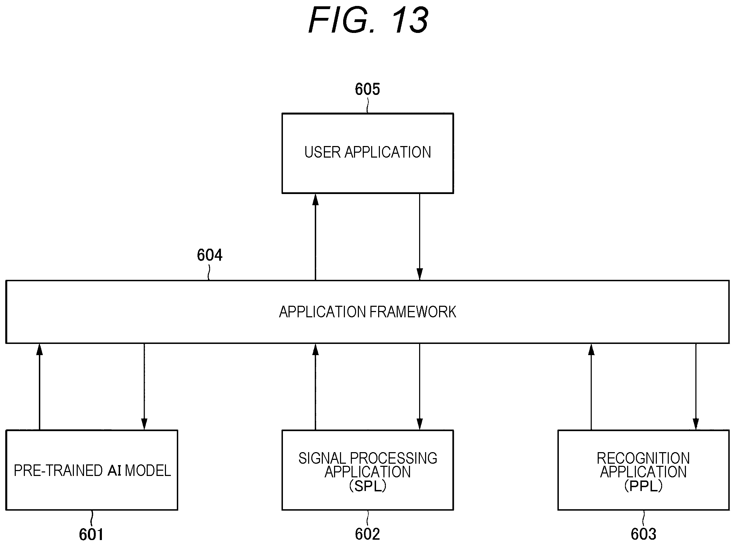

Next, a software configuration of the target device 400t on which the application runs will be described. For example, as illustrated in Fig. 13, the software configuration includes a pre-trained AI model 601, a signal processing application 602, a recognition application 603, an application framework 604, and a user application 605.

In the present technology, the recognition application 603 is an application provided by the application provision device 100. However, any of the applications or AI models illustrated in Fig. 13 can be provided by the application provision device 100, or only some applications or AI models may be provided by the application provision device 100. Furthermore, the functions of each application and AI model may be partially or entirely implemented by hardware.

The application framework 604 allows the pre-trained AI model 601, the signal processing application 602, and the recognition application 603 to exchange data and other information with the user application 605 via their respective predetermined APIs. For example, APIs such as Initialize, Analyze, Resultrelease, Finalie, GetPPLversion, and AddLicense are defined between the application framework 604 and the recognition application 603.

Initialize is used to initialize an application. Analyze is used to perform processing of analyzing an inference result from an AI model. ResultRelease is used to release memory allocated in the recognition application 603 during the Analyze processing. Finalize is used to perform processing of terminating the recognition application 603. GetPplVersion is used to obtain version information of an application. Applications developed by developers, applications stored in the application provision device 100, and applications deployed to the target device 400t may each include a processing unit corresponding to at least one or all of the APIs.

Next, a specific example of processing performed under the software configuration of the target device 400t will be described.

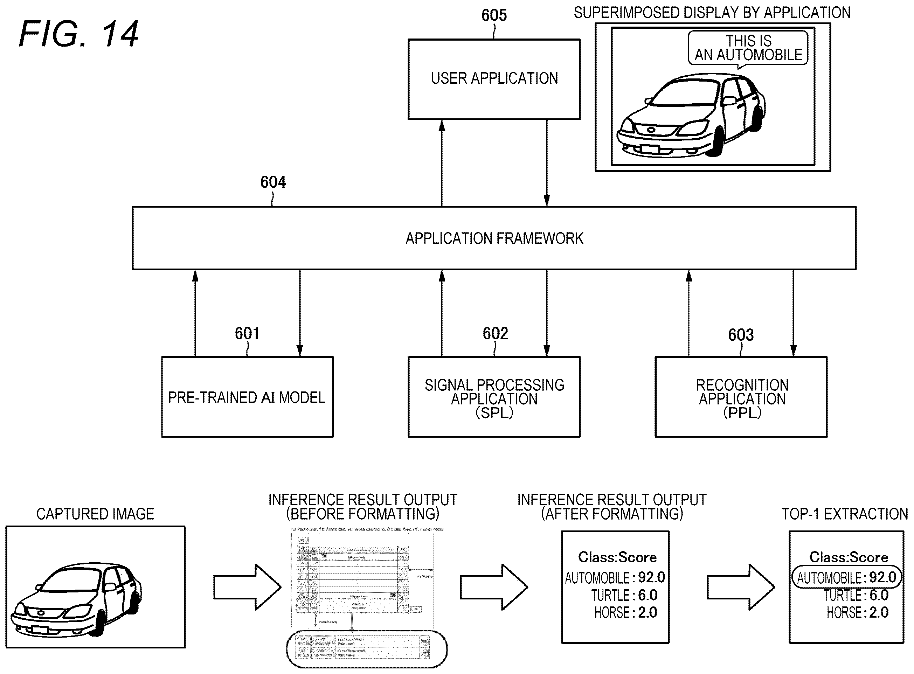

A first specific example illustrated in Fig. 14 is classification of subjects appearing in an image. In the example illustrated Fig. 14, the subject appearing in a captured image is an automobile. First, the pre-trained AI model 601 performs inference on an image captured by the camera, and outputs an inference result before formatting to the signal processing application 602.

Next, the signal processing application 602 calculates a score of each class into which objects recognized in the captured image are classified as a formatted inference result and outputs the score to the recognition application 603. Here, it is assumed that the score is calculated for each class: an automobile, a turtle, and a horse.

Next, the recognition application 603 extracts the class with the highest score, and outputs the extraction result to the user application 605 via the application framework 604. Then, the user application 605 superimposes information indicating that the subject is an automobile on the captured image, and displays the resulting captured image on a display or the like.

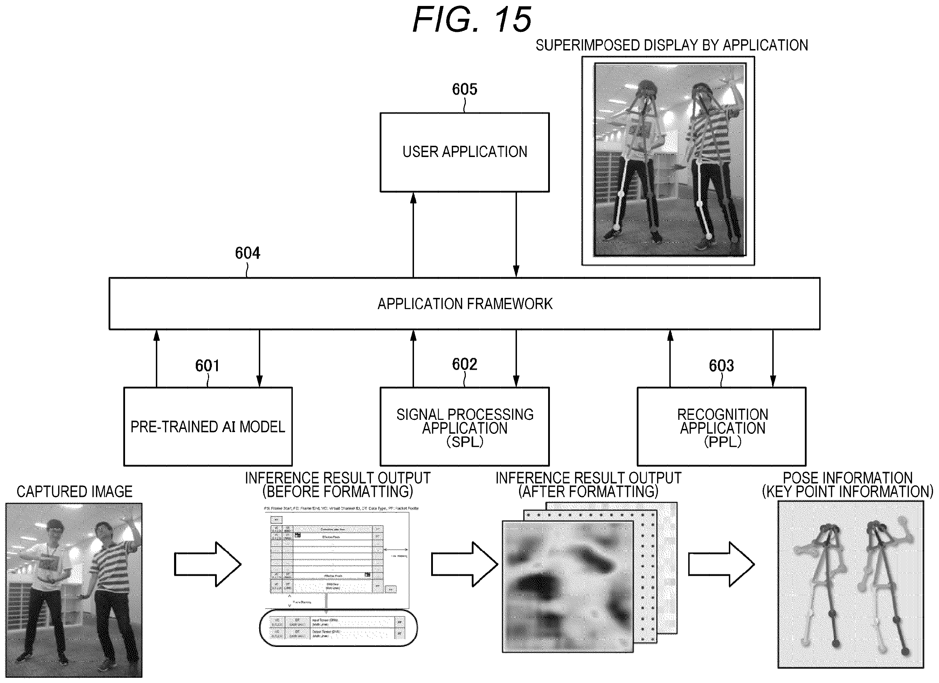

A second specific example illustrated in Fig. 15 is human pose estimation in an image. In the example illustrated in Fig. 15, two people appear in the captured image. First, the pre-trained AI model 601 performs inference on an image captured by the camera, and outputs an inference result before formatting to the signal processing application 602.

Next, the signal processing application 602 generates, for example, a heatmap in the captured image as a formatted inference result and outputs the heatmap to the recognition application 603. At this point, key point information cannot be obtained yet.

Next, the recognition application 603 performs post-processing of outputting Decode and the key point information to the formatted inference result, and outputs pose information of the subject as the key point information to the user application 605 via the application framework 604. Then, the user application 605 superimposes information indicating that the pose information on the captured image, and displays the resulting captured image on the display or the like.

The processing according to the present technology is performed as described above. According to the present technology, conversion into a format suitable for the target device 400t to which an application is deployed can be performed without increasing the burden on the application developer. This allows the application developer to efficiently develop an application and provide the application to the user using a system such as a marketplace without being bothered by differences (hardware, OS, etc.) in the target device 400t.

Furthermore, in the present technology, the application can be converted into a format suitable for the target device 400t. Therefore, the application user can receive an application in an optimal format to run on the target device 400t.

Furthermore, by converting the application into AoT, the processing time on the target device 400t can be reduced and memory usage can be improved, and the application can be run even on a target device 400t with a simple configuration or limited processing power.

Furthermore, by adding a signature to an application subjected to conversion, the integrity of the application can be ensured.

### [1-5. Description of GUI for device enrollment and application deployment]

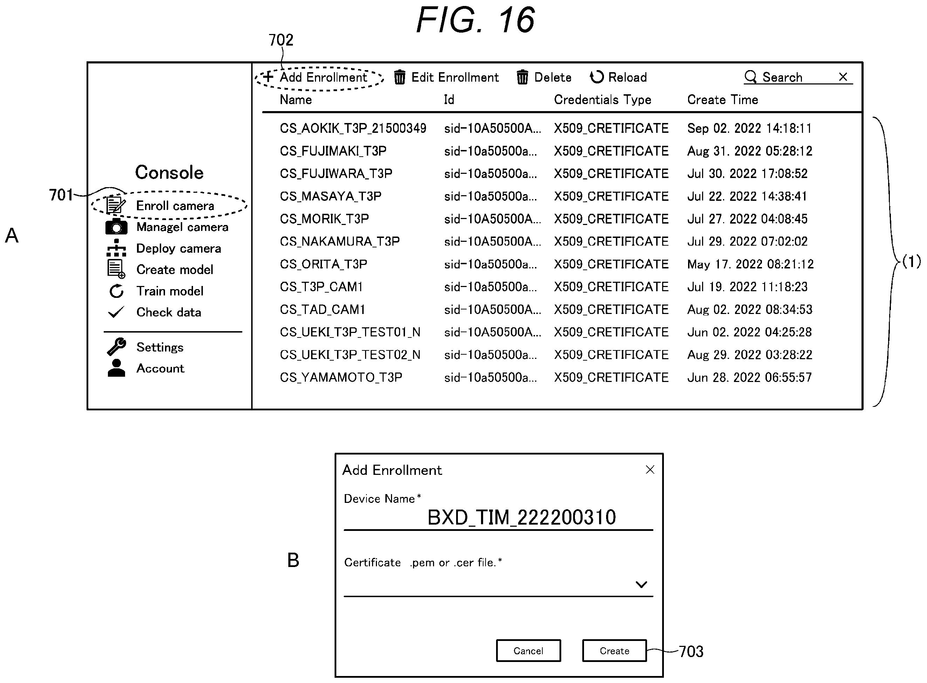

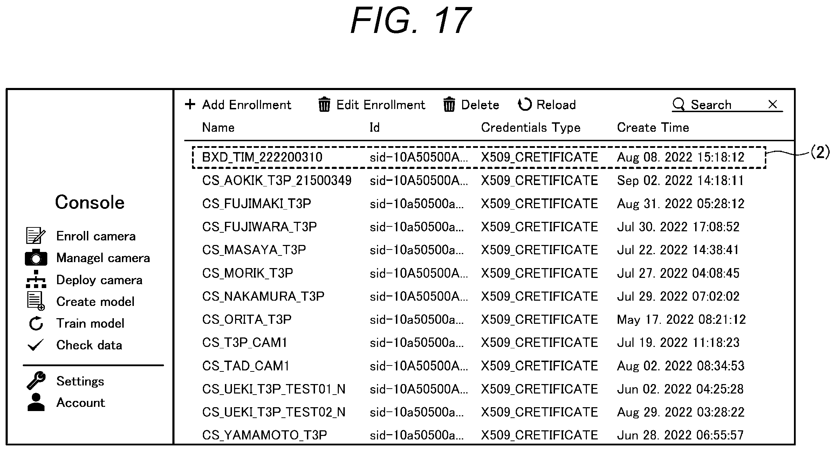

Next, an enrollment GUI for enrolling the device 400 in the application provision device 100 and an enrollment procedure will be described with reference to Figs. 16 and 17. This enrollment GUI is displayed on the user-side terminal device 300. Alternatively, the enrollment GUI may be displayed on the device 400. In the description to be given with reference to Figs. 16 and 17, the device 400 is assumed to be a camera.

First, when the user selects and presses an Enroll Camera button 701 in a menu list displayed on the left side of the enrollment GUI illustrated in Fig. 16A, a list of cameras enrolled in the application provision device 100 is displayed on the enrollment GUI as illustrated in (1) in Fig. 16A. The user who wants to enroll a new camera presses an Add Enrollment button 702.

Then, on the enrollment GUI, a dialog box for enrolling the new camera illustrated in Fig. 16B is displayed. The user enters the name and certificate of the camera to be newly enrolled in this dialog box. The certificate is entered in a file selection manner, for example, whether a pem file or a cer file. Note that the user may be requested to enter other information in addition to or instead of the name and certificate of the camera.

When the name and certificate of the camera to be newly enrolled are entered and a Create button 703 is pressed, the name and certificate of the camera are transmitted from the user-side terminal device 300 to the application provision device 100 via the network. Then, when the name and certificate of the camera are stored in the device information database 105, the camera is enrolled as the device 400. Then, the dialog box is closed, and the enrollment GUI transitions to a state illustrated in Fig. 17.

Then, as illustrated in (2) in Fig. 17, the new camera whose name and certificate have been entered is added to an enrolled device list on the enrollment GUI and displayed. This allows the user to confirm that his/her new camera has been enrolled.

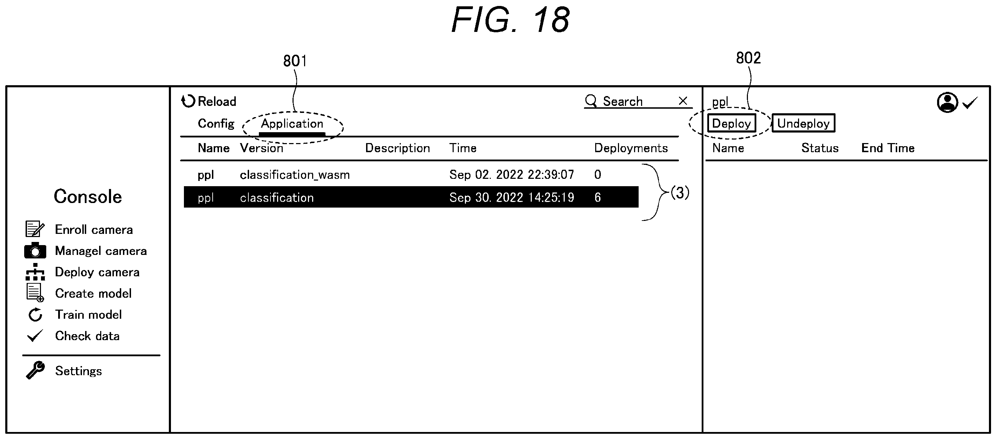

Next, a deployment GUI for deploying an application to the target device 400t and a deployment procedure will be described with reference to Figs. 18 to 20. This deployment GUI is displayed on the user-side terminal device 300. Alternatively, the deployment GUI may be displayed on the target device 400t. In the drawings, the device 400 is assumed to be a camera.

First, when the user selects and presses an Application tab 801 on the deployment GUI, a list of applications deployable to the camera is displayed as illustrated in (3) in Fig. 18. Such applications correspond to applications stored in the application database 102. Here, the user selects an application to be deployed and presses a Deploy button 802. As illustrated in Fig. 18, the selected application may be emphasized, for example, by being displayed with highlighting.

Note that, for the selection of the application, the format of the application (WASM bytecode, AoT, Native) may be selected. Furthermore, only applications in a pre-selected format may be displayed in the application list. Furthermore, conditions desired by the user, such as whether or not the processing speed is prioritized, or whether or not the security measure is required, may be selected through input, and deployable application candidates obtained through filtering under the selected conditions may be displayed.

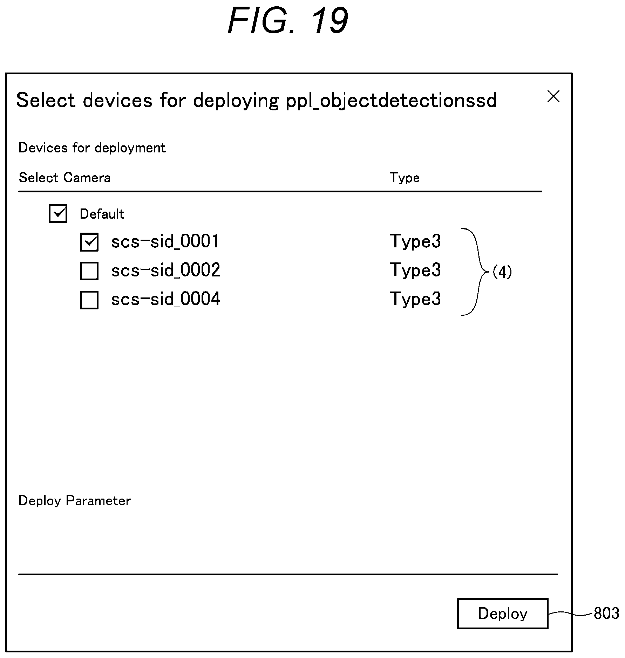

When the user selects an application to be deployed and presses the Deploy button 802, a list of a plurality of cameras as the devices 400 targeted for deployment is next displayed as illustrated in (4) in Fig. 19. In Fig. 19, identification names and types of each camera are displayed. Here, the user selects a camera as the target device 400t targeted for deployment of the application from the list of cameras. This selection can be made, for example, by checking the corresponding checkbox. In a case where the camera selected by the user already has the application deployed, replacement is performed.

Note that a plurality of cameras may be grouped, and only cameras belonging to a specific group specified by the user may be displayed. In Fig. 19, only one group "default" is displayed, and three cameras belonging to the group are displayed. The application can be deployed to any one of the plurality of cameras being displayed or to all of the plurality of cameras belonging to one group at a time.

Note that, in a list of camera candidates targeted for deployment of the application, filtering may be performed according to the format, type of bytecode (whether or not the application can be run on the camera), uses, code size, and the like of the selected application, and only appropriate cameras may be displayed.

Furthermore, it may be possible to enter deployment parameters in a json format or the like as necessary. This allows additional settings for deployment.

After the camera targeted for deployment of the application is selected, when the user presses a Deploy button 803, the target device selection information is transmitted from the user-side terminal device 300 to the application provision device 100. Then, the provision-side deployment management unit 108 starts deployment of the application to the camera as the target device 400t.

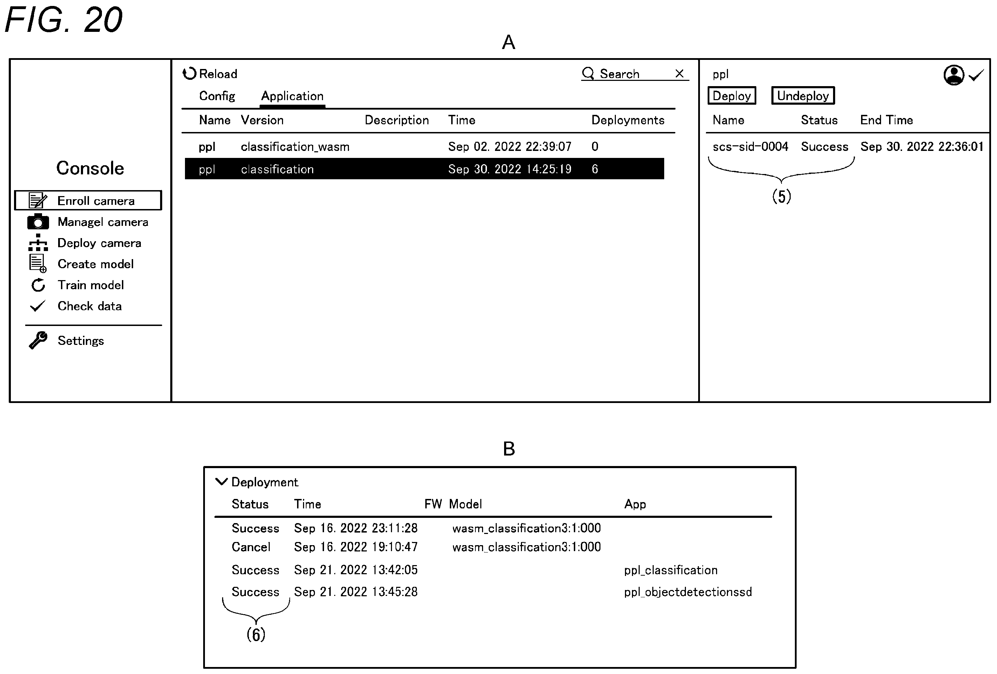

After the start of the deployment, as illustrated in (5) in Fig. 20, deployment status is displayed in a status section for the camera as the target device 400t. This allows the user to confirm the deployment status. Examples of the status include success, failure, cancel, in progress, and the like. As illustrated in (6) in Fig. 20B, the deployment status may be displayed within a GUI displayed in response to selection of a Manage Camera menu.

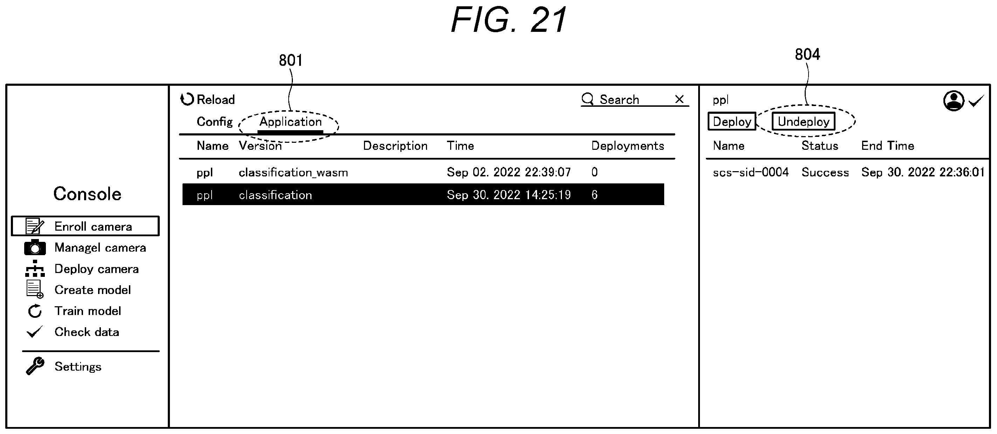

In a case of undeploying an application, as illustrated in Fig. 21, the user is only required to select and press the Application tab 801, select an application to be undeployed from the displayed application list, and press an Undeploy button 804.

Note that the names and layout of the buttons and the composition and layout of each display area on the GUIs illustrated in Figs. 16 to 21 are merely examples, and the present technology is not limited to the content illustrated in Figs. 16 to 21.

### <2. Modifications>

Although the details of the embodiment of the present technology have been described above, the present technology is not limited to the above-described embodiment, and various modifications based on the technical idea of the present technology are possible.

In the embodiment, applications are provided, but it is not limited to the applications, and AI models may also be provided. The present technology is applicable to programs, software, or application files involving format conversion and provision to the target device 400t.

The application database 102 and the device information database 105 may be configured in an external storage device instead of being included in the application provision device 100. In this case, the application selection unit 104 and the device information selection unit 106 access the external storage device to acquire the application and the target device information.

In the embodiment, the case where the target device 400t targeted for deployment of the application is selected by the user has been described, but the target device 400t to which the application provision device 100 deploys the application may be selected automatically instead of the selection by the user. For example, an AI-based determination is made on the basis of accumulated information regarding past relationships between applications and devices 400; specifically, a particular type of application is deployed to a particular type of device 400.

The present technology may also have the following configurations.
(1) An application provision device including:
   an application conversion unit that converts an application retrieved from an application database in accordance with device information retrieved from a device information database as information regarding a device on which the application is run.
(2) The application provision device according to (1), further including: an application selection unit that retrieves the application from the application database in response to a request from a user of the application and outputs the application to the application conversion unit.
(3) The application provision device according to (1) or (2), further including: a device information selection unit that retrieves the device information regarding the device that is selected by a user of the application and on which the application is run from the device information database and outputs the device information to the application conversion unit.
(4) The application provision device according to any one of (1) to (3), in which the application conversion unit switches a format of the application subjected to conversion.
(5) The application provision device according to (4), in which the application conversion unit switches the format of the application on the basis of whether or not to prioritize a processing speed of the application on the device.
(6) The application provision device according to (4) or (5), in which the application conversion unit switches the format of the application on the basis of whether or not a security measure is required for the application on the device.
(7) The application provision device according to any one of (4) to (6), in which the application conversion unit switches the format of the application on the basis of a configuration of the device on which the application is run.
(8) The application provision device according to any one of (1) to (7), in which the application is in an AoT format.
(9) The application provision device according to any one of (1) to (8), in which the application is in a Native format.
(10) The application provision device according to any one of (1) to (9), in which the application is in a WASM format.
(11) The application provision device according to any one of (1) to (10), further including: a deployment management unit that deploys the application subjected to conversion by the application conversion unit to the device.
(12) The application provision device according to any one of (1) to (11), further including: a user and device management unit that stores the device information input by the user in the device information database.
(13) The application provision device according to any one of (1) to (12), in which the application conversion unit adds a signature to the application subjected to conversion.
(14) The application provision device according to (13), in which the application for which verification of the signature has failed is not deployed to the device.
(15) The application provision device according to (13), in which the application for which verification of the signature has failed is not run on the device.
(16) The application provision device according to any one of (1) to (15), in which the application subjected to conversion by the application conversion unit has code to check a memory of the device to be accessed.
(17) The application provision device according to any one of (1) to (16), in which a GUI for enrolling the device in the device information database is displayed on a terminal device used by a user of the application or the device.
(18) The application provision device according to any one of (1) to (17), in which a GUI for deploying the application to the device is displayed on a terminal device used by a user of the application or the device.
(19) An application provision method including:
   converting an application retrieved from an application database in accordance with device information retrieved from a device information database as information regarding a device on which the application is run.
(20) A program for causing a computer to execute an application provision method, the method including:
   converting an application retrieved from an application database in accordance with device information retrieved from a device information database as information regarding a device on which the application is run.

### REFERENCE SIGNS LIST

- 100: Application provision device
- 102: Application database
- 103: User and device management unit
- 104: Application selection unit
- 105: Device information database
- 106: Device information selection unit
- 107: Application conversion unit
- 108: Provision-side deployment management unit

## Claims

1. An application provision device comprising:
an application conversion unit that converts an application retrieved from an application database in accordance with device information retrieved from a device information database as information regarding a device on which the application is run.

2. The application provision device according to claim 1, further comprising:
an application selection unit that retrieves the application from the application database in response to a request from a user of the application and outputs the application to the application conversion unit.

3. The application provision device according to claim 1, further comprising:
a device information selection unit that retrieves the device information regarding the device that is selected by a user of the application and on which the application is run from the device information database and outputs the device information to the application conversion unit.

4. The application provision device according to claim 1, wherein
the application conversion unit switches a format of the application subjected to conversion.

5. The application provision device according to claim 4, wherein
the application conversion unit switches the format of the application on a basis of whether or not to prioritize a processing speed of the application on the device.

6. The application provision device according to claim 4, wherein
the application conversion unit switches the format of the application on a basis of whether or not a security measure is required for the application on the device.

7. The application provision device according to claim 4, wherein
the application conversion unit switches the format of the application on a basis of a configuration of the device on which the application is run.

8. The application provision device according to claim 1, wherein
the application is in an AoT format.

9. The application provision device according to claim 1, wherein
the application is in a Native format.

10. The application provision device according to claim 1, wherein
the application is in a WASM format.

11. The application provision device according to claim 1, further comprising:
a deployment management unit that deploys the application subjected to conversion by the application conversion unit to the device.

12. The application provision device according to claim 1, further comprising:
a user and device management unit that stores the device information input by the user in the device information database.

13. The application provision device according to claim 1, wherein
the application conversion unit adds a signature to the application subjected to conversion.

14. The application provision device according to claim 13, wherein
the application for which verification of the signature has failed is not installed on the device.

15. The application provision device according to claim 13, wherein
the application for which verification of the signature has failed is not run on the device.

16. The application provision device according to claim 1, wherein
the application subjected to conversion by the application conversion unit has code to check a memory of the device to be accessed.

17. The application provision device according to claim 1, wherein
a GUI for enrolling the device in the device information database is displayed on a terminal device used by a user of the application or the device.

18. The application provision device according to claim 1, wherein
a GUI for deploying the application to the device is displayed on a terminal device used by a user of the application or the device.

19. An application provision method comprising:
converting an application retrieved from an application database in accordance with device information retrieved from a device information database as information regarding a device on which the application is run.

20. A program for causing a computer to execute an application provision method, the application provision method comprising:
converting an application retrieved from an application database in accordance with device information retrieved from a device information database as information regarding a device on which the application is run.
